(19) **Europäisches Patentamt / European Patent Office / Office européen des brevets**

(11) **EP 4 578 165 B1**

(12) **EUROPEAN PATENT SPECIFICATION**

(45) Date of publication and mention of the grant of the patent:
**01.10.2025 Bulletin 2025/40**

(21) Application number: **22859579.9**

(22) Date of filing: **22.08.2022**

(51) International Patent Classification (IPC):
*H04L 41/16* (2022.01)   *H04L 41/5009* (2022.01)

(52) Cooperative Patent Classification (CPC):
**H04L 41/16; H04L 41/5009**

(86) International application number:
**PCT/IB2022/057855**

(87) International publication number:
**WO 2024/042346 (29.02.2024 Gazette 2024/09)**

(54) **UNIFIED SERVICE QUALITY MODEL FOR MOBILE NETWORKS**

VEREINHEITLICHTES DIENSTQUALITÄTSMODELL FÜR MOBILE NETZWERKE

MODÈLE DE QUALITÉ DE SERVICE UNIFIÉ POUR RÉSEAUX MOBILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.07.2025 Bulletin 2025/27**

(73) Proprietor: **Telefonaktiebolaget LM Ericsson (publ)**
**164 83 Stockholm (SE)**

(72) Inventors:
- **BÁDER, Attila**
**2071 Paty (HU)**
- **HÓCZA, András**
**2626 Nagymaros (HU)**
- **MAGYAR, Gábor**
**2330 Dunaharaszti (HU)**

(74) Representative: **Ericsson**
**Patent Development**
**Torshamnsgatan 21-23**
**164 80 Stockholm (SE)**

(56) References cited:
**WO-A1-2016/187449     US-A1- 2018 270 126**
**US-A1- 2021 204 011**

- **BATTERAM HAROLD ET AL: "Delivering quality of experience in multimedia networks", BELL LABS TECHNICAL JOURNAL, WILEY, CA, US, vol. 15, no. 1, 1 June 2010 (2010-06-01), pages 175 - 193, XP011628170, ISSN: 1089-7089, [retrieved on 20140331], DOI: 10.1002/ BLTJ.20431**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The embodiments described in the present disclosure relate generally to network management and network analytics, and more particularly to a framework for determining the service quality of a plurality of services provided over a network.

### BACKGROUND

Network Analytics (NA) systems, which are part of the Network Management (NM) domain, monitor and analyze the service quality and the network quality at a session level in mobile networks. Additionally, NA systems are increasingly being used for automatic network operation thereby helping to improve the network that carries the services and/or eliminate issues that negatively affect service quality and network quality.

Conventionally, NA systems continuously monitor basic network Key Performance Indicators (KPIs). KPIs are metrics that reflect the performance of services and the network domains that carry those services. As such, KPIs are typically based on node and network events and counters. KPIs are generally aggregated over time and are often collected for specific node(s) and/or other related factors. Such factors include, for example, the types of device(s) that provide, process, or consume a given service, technical constraints associated with a provider of the service (e.g., the protocols used to provide the service), and various network-related factors (e.g., cell-related constraints and behaviors that affect the quality of the service, processing constraints of the network node(s) that carry the service, and the like). In general, KPIs can indicate node and network failures, but they usually do not contain enough information to facilitate adequate, detailed troubleshooting. Nor are they suitable for identifying End-To-End (E2E), user-perceived service quality issues.

US 2021/204011 A1 discloses methods to estimate the Quality of Experience (QoE) performance through analysis of one or more attributes of the network traffic, and adjusting one or more network operating parameters of the network. The network parameters are exchanged between a content server and a client device via the network and is obtained at a network node. The adjustment of the network operating parameters is in response to QoE performance metrics falling below a certain threshold and thus adjusting the QoE.

### SUMMARY

Embodiments of the present disclosure provide a unified QoE framework for determining QoE metrics for a plurality of mobile services based, in part, on the KPIs that are collected for the services.

According to a first aspect, the present disclosure provides a method, implemented by a node in an analytics system of a network. The method comprises receiving, from one or more network domains and on a per-session basis, a plurality of events for a service, wherein the service is associated with a service provider and a service type, correlating the plurality of events into correlated records based on the service provider and the service type, and determining a Quality of Experience (QoE) value for the session based on the correlated records. In this aspect, determining the QoE value comprises determining whether a service specific QoE model for the service exists based on the service provider and the service type associated with the service, calculating a service specific QoE value as a function of the service specific QoE model responsive to determining that the service specific QoE model exists, and calculating a generic QoE value as a function of a generic QoE model responsive to determining that the service specific QoE model does not exist. The generic QoE model calculates the generic QoE value as:

$$QoE_{generic} = QoE_{max} - L_{accessibility} - L_{integrity} - L_{retainability}$$

wherein:

$QoE_{generic}$ is a scalar value between $QoE_{min}$ and $QoE_{max}$;
$QoE_{min}$ is $\geq 0$ and is the minimum possible value for the generic QoE value when service degradation is detected;
$QoE_{max}$ is the maximum possible value for the generic QoE value when no service degradation is detected;
$L_{accessibility}$ is an estimated value defining loss as a function of service accessibility;
$L_{integrity}$ is an estimated value defining loss as a function of limitations on, and degradation to, the service caused by end devices, codecs, and the network while a session is active;
$L_{retainability}$ is an estimated value defining loss due to abnormal or unwanted service termination.

According to a second aspect, the present disclosure provides a node in an analytics system of a network. In this aspect, the node is configured to receive, from one or more network domains and on a per-session basis, a plurality of events for a service, wherein the service is associated with a service provider and a service type, correlate the plurality of events into correlated records based on the service provider and the service type, and determine a Quality of Experience (QoE) value for the session based on the correlated records. To determine the QoE value, the node is configured to determine whether a service specific QoE model for the service exists based on the service provider and the service type associated with the service, calculate a service specific QoE value as a function of the service specific QoE model responsive to determining that the service specific QoE model exists, and calculate a generic QoE value as a function of a generic QoE model responsive to determining that the service specific QoE model does not exist. The generic QoE model calculates the generic QoE value as:

$$QoE_{generic} = QoE_{max} - L_{accessibility} - L_{integrity} - L_{retainability}$$

wherein:

$QoE_{generic}$ is a scalar value between $QoE_{min}$ and $QOE_{max}$;
$QoE_{min}$ is $\geq 0$ and is the minimum possible value for the generic QoE value when service degradation is detected;
$QoE_{max}$ is the maximum possible value for the generic QoE value when no service degradation is detected;
$L_{accessibility}$ is an estimated value defining loss as a function of service accessibility;
$L_{integrity}$ is an estimated value defining loss as a function of limitations on, and degradation to, the service caused by end devices, codecs, and the network while a session is active;
$L_{retainability}$ is an estimated value defining loss due to abnormal or unwanted service termination.

According to a third aspect, the present disclosure provides a computer program which comprises executable instructions that, when executed by processing circuitry in a causes the node to perform the above method.

## BRIEF DESCRIPTION OF THE DRAWINGS

Figure 1 is a functional block diagram illustrating a system architecture according to one embodiment of the present disclosure.
Figure 2 is a functional block diagram illustrating some functional components of a Key Performance Indicators (KPI) calculation module including a Quality of Experience (QoE) calculation module according to one embodiment of the present disclosure.
Figure 3 is a functional block diagram illustrating some functional components of a generic loss model according to one embodiment of the present disclosure.
Figure 4 is a flow diagram illustrating a method for calculating loss based on Key Performance Indicators (KPIs) and other information included in data session records according to one embodiment of the present disclosure.
Figure 5 is a flow diagram illustrating a method for calculating correlation coefficients according to one embodiment of the present disclosure.
Figure 6 is a flow diagram illustrating a method of QoE parameter optimization according to one embodiment of the present disclosure.
Figure 7 is a flow diagram illustrating a method for evaluating loss models based on the KPIs and other information included in the data session records according to one embodiment of the present disclosure.
Figure 8A shows a series of graphs illustrating a loss function estimation process based on statistical data, and the results of that process, according to one embodiment of the present disclosure.
Figure 8B is a graph illustrating a default KPI loss function according to one embodiment of the present disclosure.
Figure 9 is a block diagram illustrating some parameters and their dependencies that are considered by a node in an analytics system of a network for network degradation according to one embodiment of the present disclosure.
Figure 10 is a flow chart illustrating a method for determining a generic QoE value according to one embodiment of the present disclosure.
Figure 11 is a functional block diagram illustrating some components of a node in an analytics system of a network, in which the node is configured to determine a generic QoE value according to one embodiment of the present disclosure.
Figure 12 is a functional block diagram illustrating a computer program that, when executed by the processing circuitry of a node in an analytics system of a network, causes the node to determine a generic QoE value according to one embodiment of the present disclosure.

## DETAILED DESCRIPTION

Conventional Network Analytic (NA) systems continuously monitor the Key Performance Indicators (KPIs) that reflect the performance of both the services and the network domains that carry those services. And while the KPIs can, at times, indicate node and network failures, they do not contain enough information with which to perform detailed troubleshooting procedures. Nor are they suitable for identifying user-perceived service quality issues associated with End-To-End (E2E) services.

In addition to monitoring KPIs, however, conventional NA systems also generate incidents in response to detecting unexpected events that disrupt the normal operation of a service. Typically, such incidents are generated in response to detecting explicit network failure indications (e.g., failure cause codes in signaling events) or to detecting that the value of a given KPI (or KPIs) exceeds appropriate predetermined KPI thresholds. To accomplish this function, conventional NA systems utilize well-known anomaly detection algorithms and techniques to identify unexpected changes of KPI values and outlier values for different nodes, network functions, subscribers, and terminal groups. Regardless of the particular method, though, the incidents are used by NA systems to generate corresponding alarms in Fault Management (FM) systems.

Also available are advanced, event-based analytics systems that collect and correlate elementary network events and E2E service quality metrics, as well as compute user level E2E service quality KPIs and incidents. With these systems, the per-subscriber and per-session network KPIs and incidents are aggregated for different network domains (e.g., radio and core network domains) and time domains. These types of conventional solutions are typically suitable for session-based troubleshooting and analysis of network issues.

Certain specialized KPIs, such as Mean Opinion Score (MOS), for example, are available for certain services, such as voice and video services. In these cases, the specialized KPIs may be at least partially standardized with their value being derived from Transport Control Protocol (TCP) level metrics. Such metrics include, but are not limited to, those associated with to delay, Round Trip Time (RTT), loss, and/or other quality metrics (e.g., video resolution). Generally, the values for these specialized KPIs fall into a predetermined range (e.g., 1-5) to facilitate interpretability across different systems. For example, using the example range of 1-5, a KPI value of '1' may indicate the worst quality for a given parameter while '5' may indicate the best quality for the given parameter.

Additionally, special QoE models exist for deriving KPIs for encrypted traffic. Such models are especially beneficial, for example, in connection with video services, which are responsible for most of the current mobile internet traffic. However, these special QoE models are often trained by machine learning models, and therefore require a lot of training data. Moreover, the training process must be repeated and maintained for each different service provider. This is because the videos of some video service providers (e.g., YOUTUBE) behave differently than the videos provided by other service providers (e.g., NETFLIX). Therefore, conventional systems typically require the creation of many different models to address the different service providers (e.g., per service provider model creation).

Although helpful, such conventional techniques of a KPI-based analysis for mobile networks can be problematic. For example, there are currently many unique types of KPIs. This is normal, though, because there are multiple domains and technical aspects to cover with performance metrics. However, most of these KPIs have different ranges, different meanings, and/or different units. Not only do these differences complicate the interpretability and practical use of KPIs, but the different ranges, units, and interpretability complicate efforts to efficiently embed the KPI values in software tools (e.g., those used at Network Operation Centers (NOC)). Thus, a standardized view of the KPIs (e.g., a standard range of values) would greatly benefit non-trained NOC personnel.

There are, as indicated above, certain specialized KPIs (e.g., MOS-related KPIs) that do fall within a standardized range of values (e.g., 1..5). Unfortunately, though, only a minority of all KPIs fall within a standardized range. More importantly, such standardized KPI values are typically available only for KPIs associated with unencrypted traffic. This does not bode well for current networks and services as most of today's web and video traffic is at least partially encrypted. Additionally, conventional NA systems largely lack the methods and techniques that provide similar MOS-like scaled QoE metrics (i.e., KPI values) for them.

Nevertheless, several current approaches attempt to tackle the encrypted web and video issues to derive such MOS-like QoE metrics. However, these approaches require QoE models that are developed on a case-by-case basis for each service provider because their traffic policies differ. Such approaches operate mostly based on machine learning techniques and require plenty of training data. This is a particularly concerning issue for 5G networks. Specifically, the number of service providers and/or services in 5G networks will greatly increase - many, or all, of which will need a tailored method for QoE analysis developed specifically for them. Developing such individual, tailored QoE analysis techniques, however, requires a lot of effort. And because the number of service providers is growing, there is a need to obtain a lot of training data for each service provider and/or service. Further, not only must the training data be separately obtained for each service provider and/or service, but it must also be obtained continuously and used continuously for retraining their respective, specific techniques. In practice, such approaches are very costly and difficult to maintain.

Further, there are certain correlations and dependencies between the different KPIs. For example, a packet loss KPI is implicit in a video MOS KPI. Although conventional NA and NM systems utilize the existing large number and variety of KPIs when performing QoE analyses, they fail to consider these correlations and inter-dependencies. Rather, these relationships and inter-dependencies are hidden in the analytics software tools, thereby making the analysis and the evaluation of the state of a network difficult and complex.

Additionally, several KPIs currently associated with conventional systems are resource KPIs that are used, for example, to evaluate a given network node. However, with current NM systems, the primary focus of the analysis has shifted from providing resource KPIs to providing end-user specific KPIs. Not all domains, however, are configured to provide end-user specific, service QoE KPIs from the resource KPIs measured at node level.

Accordingly, the present embodiment addresses these, and other, issues. Particularly, embodiments of the present disclosure provide a unified QoE framework for determining QoE metrics for a plurality of mobile services based, in part, on the KPIs that are collected for the services. According to the present embodiments, the resultant QoE metrics are scalar values (i.e., they have no unit of measure) and fall on a unified scale. Further, the present embodiments eliminate any dependencies that may exist between the KPIs used in determining the QoE metrics. Therefore, the QoE metrics determined using the QoE framework of the present embodiments are independent from each other.

To achieve the unified QoE framework, the present disclosure provides a generic QoE calculation module that has a loss model component, a KPI coupling calculation component, and a machine learning (ML) parameter optimization component. The QoE calculation module is part of the existing NA system, which collects and correlates network event information and calculates various resource and/or network KPIs. Additionally, the unified QoE framework of the present disclosure is configured to calculate service KPIs for a predetermined number of traffic types, and estimates factors due to losses and soft drops in a termination phase.

The QoE calculations are based on a loss model, which estimates the service quality degradation due to all monitored KPIs. According to the present embodiments, the QoE calculation module estimates the degradation during setup of the session, while the session is on-going, and during termination of the session. Particularly, the QoE calculation module considers failures due to delay and access failure. During the session, the QoE calculation module considers the losses that are due to the codec(s) used to communicate the session data, as well as the terminal receiving the session data. Further, network parameters are also considered by the QoE calculation module.

To avoid considering the same network-related issue multiple times, the QoE calculation module accounts for any correlation(s) that may exist among network KPIs. To accomplish this function, the QoE calculation module continuously monitors and calculates KPIs and takes those values into account when estimating loss. Further, the present embodiments classify service providers based on service type. That way, if a situation arises where the loss parameters for a new service or service provider are unknown, the QoE calculation module can initially apply a QoE calculation framework for a same service type that has already been established. Moreover, the present embodiments also determine and/or optimize the internal functional parameters of the underlying KPI computation system without requiring external intervention or the initial setting of parameters.

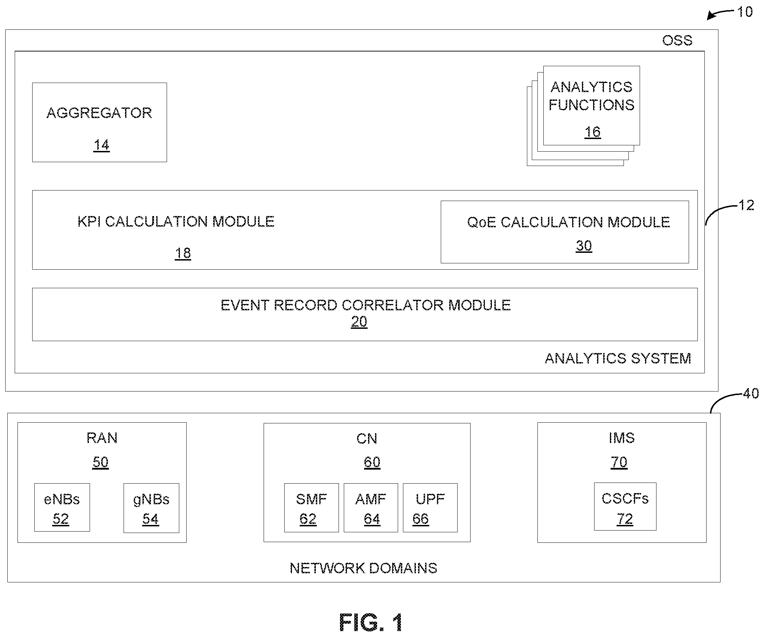

Turning now to the drawings, Figure 1 is a functional block diagram illustrating a system architecture 10 according to one embodiment of the present disclosure. It should be readily clear to those of ordinary skill in the art that architecture 10 of Figure 1 is illustrative only and that architecture 10 may include other components not specifically illustrated herein.

As seen in Figure 1, architecture 10 of the present disclosure comprises an Operations Support System (OSS) having a Network Analytics (NA) system 12. According to the present disclosure, NA system 12 is configured to collect real-time events from various network nodes and network functions resident in different network domains 40. Such network domains 40 include, but are not limited to, Radio Access Network (RAN) domains 50, Core Network (CN) domains 60, and Internet Protocol Multimedia Subsystem (IMS) domains 70. Some of the most relevant data sources for each domain 50, 60, 70 include, but are not limited to, 4G and 5G base stations (e.g., eNBs 52, gNBs 54) in RAN domain 50, session management functions (SMF 62), Access and Mobility Management Functions (AMF 64), core network control functions, and core network user plane functions (UPF 66) in CN domain 60, and Call Session Control Functions (CSCFs) 72 in IMS domain 70. As those of ordinary skill in the art will readily appreciate, other data sources not specifically identified here may exist in the illustrated domains 50, 60, 70, and/or in other domains not illustrated in the figures.

The Event Record Correlator module 20 receives the events from domains 50, 60, 60, and correlates the events on a per-session basis into per-session correlated records with each per-session correlated record comprising information related to one or more KPIs. The per-session correlated records are then streamed to the KPI calculation module 18. According to the present embodiments, KPI calculation module 18 is configured to process KPIs associated with received events, as is conventional. Unlike conventional systems, however, the KPI calculation module 18 also comprises a QoE calculation module 30 that extends the functionality of KPI calculation module 18. The resultant KPIs, including the QoE metrics computed from those KPIs, are thereafter aggregated by Aggregator 14 and used in various Analytics Functions 16.

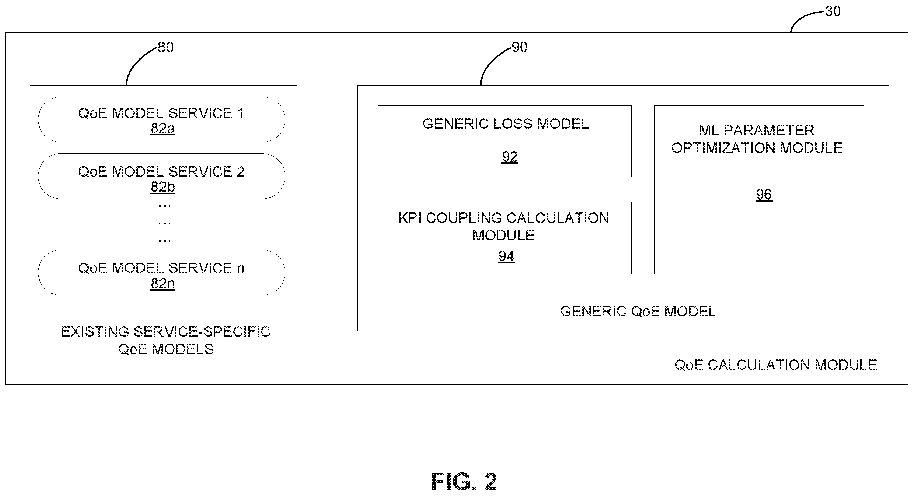

Figure 2 is a functional block diagram illustrating some of the functional components of QoE calculation module 30 according to one embodiment of the present disclosure. As seen in Figure 2, QoE calculation module 30 comprises one or more service specific QoE models 82a, 82b,...82n (collectively referred to herein as "service specific QoE models 80").

Each service specific QoE model 82a, 82b,...82n is developed and maintained for a particular service provider and/or service provided by the service provider. As described above, however, the service specific QoE models 80 are available only for very limited number of service providers and services. Further, the increasing number of services providers and services entering the 4G and 5G space will only exacerbate the complexities of providing specific QoE analyses. Therefore, according to the present embodiments, QoE calculation module 30 is specially configured to perform the QoE analyses and estimate the QoE metrics for any new and existing service providers and/or services for which no service specific QoE model 80 is available. To accomplish this function, the present embodiments configure QoE calculation module 30 to comprise a generic QoE model 90 that includes a generic loss model 92, a KPI coupling calculation module 94, and a machine learning (ML) parameter optimization module 96.

*Generic Loss Model*

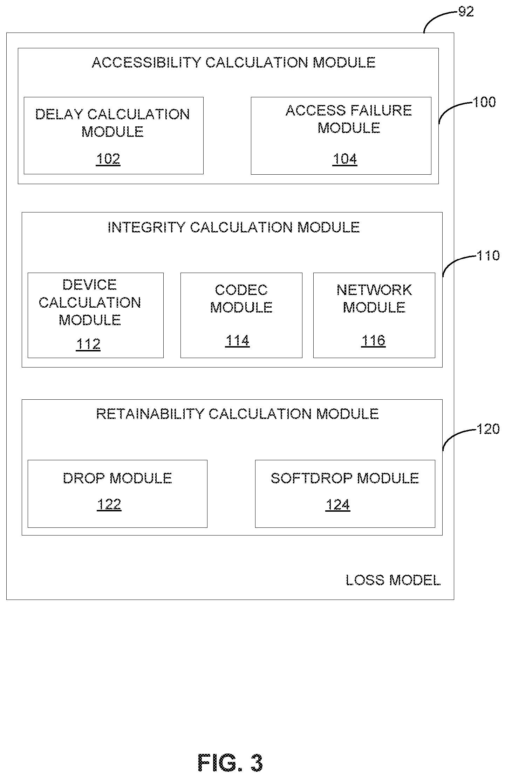

Figure 3 is a functional block diagram illustrating some functional components of the generic loss model 92 according to one embodiment of the present disclosure. The generic loss model 92 is configured to calculate an estimated QoE value for a service provider and/or service based on three loss factors - accessibility, integrity, and retainability. To that end, this embodiment of the generic loss module 92 comprises an accessibility calculation module 100, an integrity calculation module 110, and a retainability calculation module 120. The accessibility calculation module 100 is configured to calculate the accessibility factor (i.e., an estimated value representing loss due to the accessibility to the service by a user) based on a delay rate of a session setup and an access failure rate. The integrity calculation module 110 is configured to calculate the integrity factor (i.e., an estimated value representing loss due to the integrity of the service) based on issues experienced at the user's device, the codec(s) used to transport the session data, and network losses. The retainability calculation module 120 is configured to calculate the retainability factor (i.e., an estimated value representing loss due to the retainability of the service) based on the occurrences of drop and softdrop during a session.

The present embodiments utilize a loss model (i.e., generic loss model 92) to calculate a QoE value because the present embodiments focus on service degradation. If no service degradation is detected, the generic loss model 92 assumes that no loss exists and that the QoE is likewise not degraded. In these cases, the generic loss model 92 assigns the maximum possible value to the resultant QoE value. However, if service degradation is detected, the generic loss model 92 computes the QoE value as described in more detail below.

According to the present embodiments, the QoE value provided by generic loss model 92 is a scalar value. That is, the QoE value has no units and falls within a predetermined range of values (e.g., *1..n*). In this disclosure, the present embodiments express the QoE value as a number in a range of 1..5, where 1 represents the worst possible QoE value (i.e., due to high loss) and 5 represents the best possible QoE value (i.e., due to little or no loss). The use of this particular range is advantageous as it is typically utilized for Mean Opinion Score (MOS); however, as those of ordinary skill in the art will readily appreciate, the specific use of this range is for illustrative purposes only. The present embodiments are not so limited as the predetermined range can comprise any range of values needed or desired.

The generic loss model 92 computes the QoE value in accordance with detected service degradation. Service degradation can occur in the setup phase of a service session, the service phase of the service session, and the termination phase of the service session. According to the present embodiments, each phase is analyzed and handled separately, with the importance of the detected degradations strongly depending on the type of service being provided. For example, when performing a QoE analysis, accessibility factors may be more important than other factors where the session of interest is a web service session or a message service session. As another example, it may be more important to consider the service quality during a video streaming session than it is to consider the delay that occurred during the initial session setup.

Regardless of the particular importance of a given factor, however, the generic loss model 92 of the present embodiments calculates the resultant QoE value using the following general equation:

$$QoE_{generic} = QoE_{max} - L_{accessibility} - L_{integrity} - L_{retainability}$$

where:

$QoE_{generic}$ is a scalar value between $QoE_{min}$ and $QoE_{max}$;
$QoE_{min}$ is $\geq 0$ and is the minimum possible value for the generic QoE value when service degradation is detected;
$QoE_{max}$ is the maximum possible value for the generic QoE value when no service degradation is detected;
$L_{accessibility}$ is an estimated value defining loss as a function of service accessibility;
$L_{integrity}$ is an estimated value defining loss as a function of limitations on, and degradation to, the service caused by end devices, codecs, and the network while a session is active;
$L_{retainability}$ is an estimated value defining loss due to abnormal or unwanted service termination.

*Accessibility Factor*

The accessibility factor $L_{accessibility}$ is an estimated value representing loss due to accessibility to the service. In calculating the accessibility factor, the accessibility calculation module 100 considers two separate loss factors - loss due to service delay $L_{delay}$ calculated by the delay calculation module 102 and loss due to the failure to access the service $L_{accessfailure}$ calculated by the access failure module 104. Thus:

$$L_{accessibility} = L_{accessfailure} + L_{delay}$$

As stated above, however, some factors may be more important than others to consider in the analysis based on the type of service. Thus, in one embodiment of the present disclosure, the accessibility calculation module 100 qualifies the calculations according to that relative importance using a coefficient multiplier. As an example, the accessibility factor can therefore be calculated as:

$$L_{accessibility} = F_{access} \times \left( L_{accessfailure} + L_{delay} \right)$$

where:

$F_{access}$ is a coefficient multiplier value defining the relative importance of service accessibility according to the service type and service length;
$L_{accessfailure}$ is an estimated value defining loss as a function of service access failure; and
$L_{delay}$ is an estimated value defining loss as a function of service delay.

In this embodiment, the coefficient multiplier value $F_{access}$ is dependent on the type and length of the service undergoing the QoE analysis and is calculated as follows.

$$F_{access} = 1$$

if access to the service fails; and

$$F_{access} = \frac{1}{3} \times \left( \frac{T_{l,all,avg}}{T_{l,all,avg} + T_l} \right)$$

if access to the service does not fail; where:

$T_l$ is a value that defines the length of the session; and
$T_{l,all,avg}$ is a value that defines the average session length for all service types.

Further, the amount of loss for the service that is due to service access failure $L_{accessfailure}$ is related to the service losses for other services of the same service type across an aggregated period of time. Thus:

$$L_{accessfailure} = 4 \times R_{accessfailure}$$

where $R_{accessfailure}$ is a value that defines an access failure ratio for one or more services that are of the same type as the service undergoing the QoE analysis within a predetermined aggregated time period.
The delay factor $L_{delay}$ is estimated as:

$$L_{delay} = \left[ \frac{1 - T_{d,avg}}{\left( T_d - T_{d,avg} \right)} \right] \times 4 \times \left( 1 - R_{accessfailure} \right)$$

where:

$T_d$ defines a setup time for the service;
$T_{d,avg}$ defines an average setup time for the same service; and

where $L_{delay}$ is set to '0' when $L_{delay}$ is negative.

## *Integrity Factor*

The integrity factor $L_{integrity}$ is an estimated value defining loss for a service as a function of limitations on, and degradation to, the service while a session is active. For example, in one embodiment, the integrity calculation module 110 calculates $L_{integrity}$ based on the limitations and degradations to the service due to the devices associated with the service, calculated by the device calculation module 112, the codecs used for the service, calculated by the codec module 114, and the network domain calculated by the network module 116. Thus:

$$L_{integrity} = L_{device} + L_{coding} + L_{network}$$

where:

$L_{device}$ is an estimated value defining loss for the service due to the end devices and is determined based on independent measurements of the service made by the end devices, or on capabilities of a device type of the device;
$L_{coding}$ is an estimated value defining a sum of the losses for the service due to the codecs used in coding the data and the transcodings of the data between different types of codecs in a data path; and
$L_{network}$ is an estimated value defining network degradation in a given network domain, and is determined based on one or more Key Performance Indicator (KPI) values reported by the given network domain, and the interdependencies of the KPI values reported by the given network domain.

In more detail, the losses for a service that are due to the devices associated with the service $L_{device}$ are associated with the limitations of the originating and terminating devices. Thus:

$$L_{device} = L_{O\text{-}device} + L_{T\text{-}device}$$

where:

$L_{O\text{-}device}$ is an estimated value defining loss for the service at an originating device;
$L_{T\text{-}device}$ is an estimated value defining loss for the service at a terminating device.

In general, these limitations are represented by parameters that are predetermined using independent measurements of the service, and/or are based on the capabilities of the type of device involved in the service. In the NA system 12 of the present disclosure, the device types are determined based on the unique International Mobile Equipment Identity (IMEI) of the device.

Additionally, the losses due to the devices associated with the service are a function of the service type. By way of example only, the screen size and quality are more important for video services than they are for voice services. Thus:
$L_{O\text{-}device}$, $L_{T\text{-}device}$ (IMEI, service type)

The following table illustrates an example of the relationship between a device's IMEI and the service type.

**Table 1** Example loss factors due to device type and service types used by the devices.

| IMEI | DEVICE TYPE | SCREEN RESOLUTION | SERVICE TYPE | $L_{O\text{-}device}$ | $L_{T\text{-}device}$ |
|---|---|---|---|---|---|
| 35780502 | Tablet | 1366 x 768 | Voice | 0.1 | 0.1 |
| | | | Video | N/A | 0.2 |
| | | | Gaming | 0.2 | 0.2 |
| | | | Data Transfer | N/A | 0 |

The sum of the losses for the service due to the codecs and the transcodings used for the service data $L_{coding}$ are considered by the present embodiments. In most cases, a single codec is used, thereby negating the need to estimate losses due to transcoding the service data between different codecs. However, in some cases, the service data can be transported through different network domains and/or different network types that use different codecs. By way of example only, such a situation may occur in connection with the traffic of voice services being transported over two or more different network domains. Embodiments of the present disclosure are configured to handle such situations. Thus:

$$L_{coding} = SUM\left(L_{codec} + L_{transcoding}\right)$$

where:

$L_{codec}$ is an estimated value defining service loss due to the codecs used in coding service data; and
$L_{transcoding}$ is an estimated value defining service loss due to the one or more different codecs used by one or more different networks in transcoding the service data.

According to the present embodiments, the service losses $L_{codec}$ are a function of the type of codec used for the service and on the bitrate for the service data. Therefore:

$L_{codec}$ (codec type, bitrate)

The losses for the service due to transcoding $L_{transcoding}$ are a function of the types of codecs used in the transcoding. Thus:

$L_{transcoding}$ (from codec type, to codec type)

The following tables provide examples of these loss factors according to one embodiment.

Table 2 Example loss factors due to codecs used for service.

| CODEC TYPE | BITRATE | SERVICE TYPE | $L_{CODEC}$ |
|---|---|---|---|
| EVS | ----- | Voice | 0.05 |
| AMR WB | 1425 kbps | Voice | 0.05 |
| AMR WB | 19.85 kbps | Voice | 0.1 |
| MPEG4 | ----- | Video | 0.1 |

Table 3 Example loss factors due to transcoding.

| FROM CODEC | TO CODEC | SERVICE TYPE | $L_{CODEC}$ |
|---|---|---|---|
| EVS | AMR WB | Voice | 0.1 |
| AMR WB | GSM FR | Voice | |

As previously described, the losses considered for determining $L_{integrity}$ also consider the losses for a service due to network degradation $L_{network}$ in one or more given network domains. According to the present disclosure, the estimated losses $L_{network}$ are calculated as a function of one or more KPI values reported by the given network domain, as well as the KPI interdependencies reported by the given network domain.

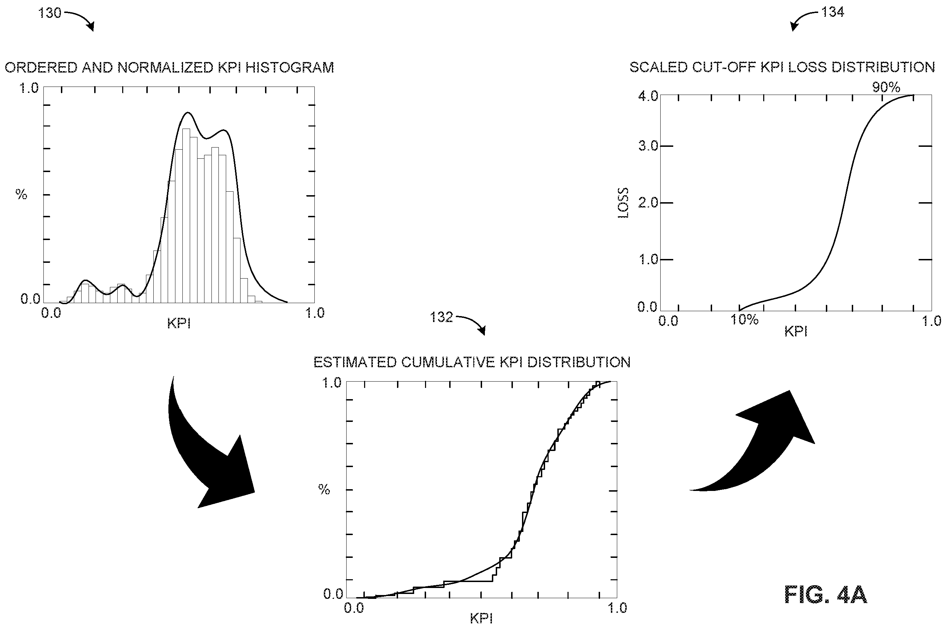

More particularly, each KPI has a what is referred to herein as a "goodness direction" that depends on the KPI value. For example, if a KPI related to a success rate has a value that is increasing, it means better service quality. Conversely, if a KPI related to an execution time related is increasing, it means worsening service quality. Therefore, for the sake of uniformity, the present embodiments orders each KPI value from its worst value to the best value. The ordered values are then scaled to a [0,1] interval, where '0' represents the worst ordered KPI value (i.e., the minimum) and '1' represents the best (i.e., maximum) ordered KPI value. Then, the different KPI value occurrences stored in the input records, which are described in more detail below, are counted. Based on the counted KPI values, a normalized KPI histogram (graph 130 in Figure 4A) is generated indicating the overall "goodness" distribution of the given KPI for a given observation period. A Cumulative Distribution Function (CDF) (graph 132 in Figure 4A) is then generated from this histogram by computing the total occurrences increasingly and function approximation of the resulted empirical values with a math library. The final KPI loss function (graph 134 in Figure 4A) is then derived from this CDF by cutting off the function at 10% (by default) and scaling it to a [0,4] interval. The 10% cut off means that all loss values are 0 below this limit. In one embodiment, a default cut off value is initially stored in the model for each KPI. This default cut off value can be updated manually. However, over time, an optimal cut off value is estimated using ML techniques for each KPI using the data records obtained during that time.

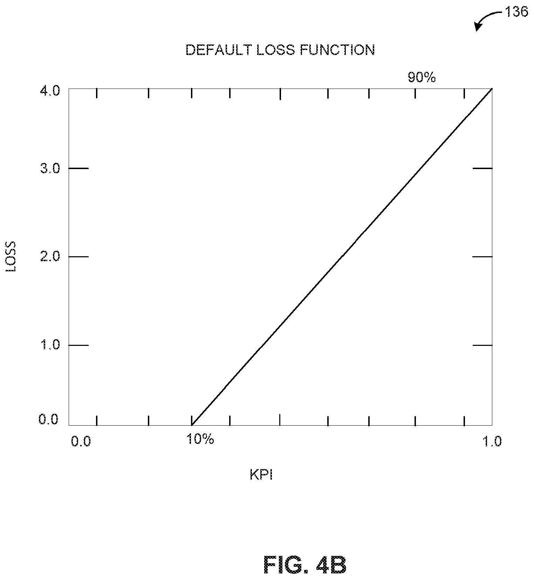

It should be noted that, in some situations, the necessary KPI loss function may not be available. This situation may occur, for example, when the QoE system of the present disclosure is initially utilized or in rare KPI filter conditions. Therefore, the present embodiments handle these cases in the evaluation process using a backoff logic. As described in more detail below, the backoff logic uses the stored data in a Basic Statistic module to provide a default loss function (graph 136 in Figure 4B). As seen in Figure 4B, the default loss function in at least one embodiment is a linear interpolation between the minimum and maximum values of a given KPI. The minimum and maximum KPI values in the Basic Statistic module are updated automatically, and in some cases, such as at initialization, minimum and maximum KPI values in the Basic Statistic module be set manually based on domain knowledge.

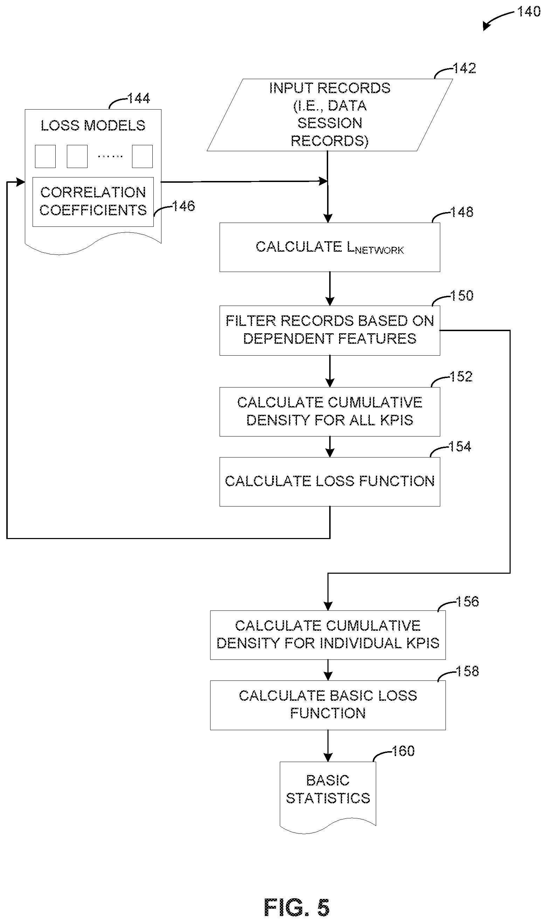

With the above in mind, Figure 5 is a flow diagram illustrating a method 140 for calculating loss based on the KPIs and other information included in a set of correlated input data session records 142 according to one embodiment of the present disclosure. Each correlated input data session record comprises one or more KPIs. As seen in Figure 5, there are a plurality of loss models 144. Each loss model includes, or is associated with, a configuration regarding its computational method and dependencies and has associated correlation coefficients 146. Given the input data session records 142, the loss models 144, and the correlation coefficients 146, this embodiment of the present disclosure calculates $L_{network}$ (box 138) as:

$$L_{network} = \sum_{k=1}^{n} L_k - \sum_{i,j}^{n} C_{i,j} L_i L_j$$

where:

$L_k$ is an estimated value defining loss due to network degradation in a network domain and depends on the service type, the service provider, and the transport protocols that are used in the network domain to deliver the service;
$L_i$ is an estimated value defining loss due to network degradation in the network domain based on an $i^{th}$ KPI value comprised in a correlated record;
$L_j$ is an estimated value defining loss due to network degradation in the network domain based on a $j^{th}$ KPI value comprised in a correlated record; and
$C_{i,j}$ is a correlation coefficient defining a correlation between the $i^{th}$ and $j^{th}$ KPI values of a correlated record.

There are various ways in which to estimate the value for $L_k$ according to the present disclosure. In one embodiment, for example, the value for $L_k$ can be estimated based on a linear function. In these cases:

$L_k = L_{kmin}$ when the KPI values of the correlated input data session records 142 indicate a maximum amount of network degradation in the network domain; and

$L_k = L_{kmax}$ when the KPI values of the correlated input data session records 142 indicate a minimum amount of network degradation in the network domain.

In another embodiment, $L_k$ is further estimated based on statistical values for the KPIs. In these cases:

$L_k = L_{kmin}$ when the KPI values used in the estimation are in the lowest $10^{th}$ percentile of the KPI values in the correlated records; and

$L_k = L_{kmax}$ when the KPI values used in the estimation are in the $90^{th}$ percentile of the KPI values in the correlated records.

In at least one embodiment, $L_k$ is estimated based on a function determined for the service type associated with the service. In another embodiment, however, $L_k$ is estimated based on both the statistical values for the KPIs and on the function determined for the service type associated with the service.

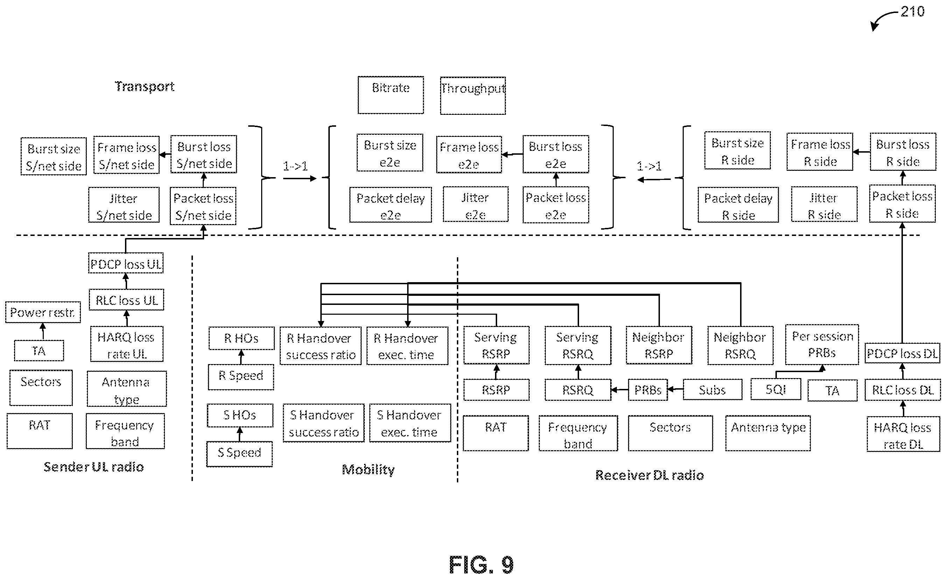

Regardless, method 140 next filters the correlated input data session records 142 based on their dependent features (box 150). Particularly, one or more of the KPIs in the correlated input data session records 142 may depend on multiple features like such as service type, service provider, and transport protocol, for example. A example hierarchy of dependent features 210 is illustrated seen in Figure 9 and is described later in more detail. In this embodiment, method 140 collects statistical data from the distribution of KPI values by considering the dependent features. Method 140 then calculates the cumulative density for all KPIs in the correlated input data session records 142 (box 152) (e.g., graph 130 in Figure 4A), estimates the CDF (e.g., graph 132 in Figure 4A), and calculates the resultant loss function (box 154) based on the estimated CDF (e.g., graph 134 in Figure 4A). The resultant loss function is then saved as a loss model with the other loss models 144, or used to update one or more existing loss models 144.

As seen in this embodiment, the resultant loss model may be computed from one or more of the plurality of loss models 144 based on their settings. The one or more loss models are referred to as "aggregated loss models" and are most likely at least partially dependent on each other. Therefore, the amount of their common coupling loss is extracted from the total loss sum. In one embodiment, extracting the common coupling loss is done using the calculated correlation coefficients 146, which are computed and updated as part of method 140. The computation of the calculated correlation coefficients 146 according to the present embodiments is described in more detail below.

Additionally, as seen in Figure 5, one embodiment of the present disclosure is configured to calculate an individual loss model from a single KPI value received in the input data session records 142. As is the case with the "aggregated loss models," the single KPI value may depend on one or more features (e.g., service type, service provider, and transport protocol) as seen in the example hierarchy of dependent features 210 illustrated seen in Figure 9. Thus, as seen in Figure 5, once the loss value for $L_{network}$ has been calculated (box 148) and the correlated input data session records 142 have been filtered based on their dependent features (box 150), method 140 calculates a cumulative density for the individual KPIs (box 156) (e.g., graph 130 in Figure 4A), estimates the CDF (e.g., graph 132 in Figure 4A), and based on the estimated CDF, calculates a basic loss function (box 158) (e.g., graph 134 in Figure 4A). The basic loss function is then saved to Basic Statistic loss model 160.

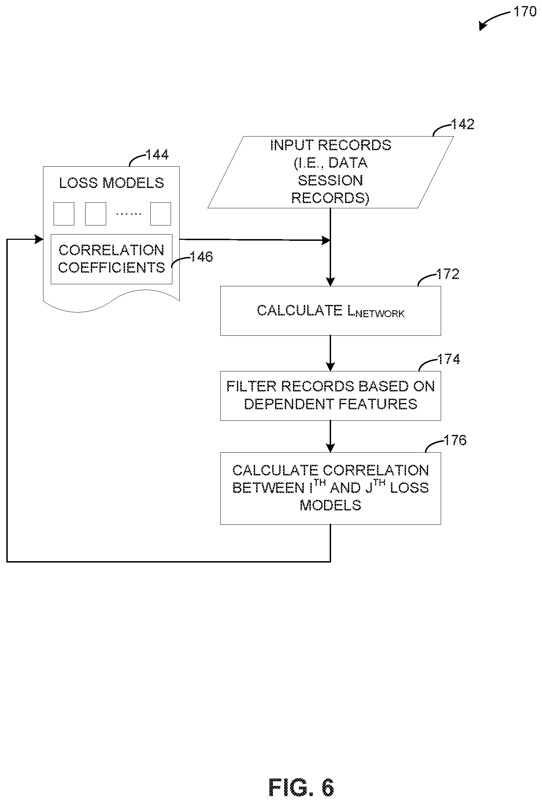

As previously stated, the correlation coefficients 146 are used in the present embodiments to extract the common coupling loss that appears due to the dependencies across different loss models. Figure 6 is a flow diagram illustrating a method 170 for calculating the correlation coefficients according to one embodiment of the present disclosure.

As seen in Figure 6, method 170 calculates the loss value for $L_{network}$ (box 172) and filters the correlated input data session records 142 based on their dependent features (box 174), as previously described. To calculate the correlation coefficients 146, method 170 calculates the correlation between the $i^{th}$ and $j^{th}$ loss models (box 176). That is, this embodiment of the present disclosure calculates a correlation coefficient for each $L_i$ and $L_j$ pair that are referenced in at least one correction sum (i.e., used in the calculation of $L_{network}$). The calculation can be performed with any correlation formula known in the art. However, the computation can result in a value that is in the interval [-1,1]. Therefore, the present disclosure normalizes the correlation coefficient to the [0,1] interval at the end of process. In one embodiment, the calculation for determining a correlation coefficient $C_{i,j}$ 136 is as follows:

$$C_{i,j} = \mathrm{Norm}\left( \frac{\sum_{k=1}^{n}\left(L_{ik}-\overline{L_i}\right)\left(L_{jk}-\overline{L_j}\right)}{\sqrt{\sum_{k=1}^{n}(L_{ik}-\overline{L_i})^2}\sqrt{\sum_{k=1}^{n}(L_{jk}-\overline{L_j})^2}} \right)$$

where:

$L_{ik}$, $L_{jk}$ are estimated values defining loss due to network degradation in the network domain and are calculated based on KPI values comprised in a $k^{th}$ correlated input data session record; and

$\overline{L_i}$, $\overline{L_j}$ are average estimated values defining loss and are calculated based on KPI values all correlated input data session records in a correlated input data session record set.

*Retainability Factor*

The retainability factor $L_{retainability}$ is an estimated value representing loss for the service due to abnormal or unwanted service termination. Retainability loss is due to one of two factors - "drop" and "soft drop." Therefore, as was seen in Figure 3, the retainability calculation module 120 comprises a drop module 122 for calculating loss due to the drop factor, and a softdrop module 124 for calculating loss due to the soft drop factor. Thus:

$$L_{retainability} = \begin{bmatrix} L_{drop} \\ L_{softdrop} \\ 0 \end{bmatrix}$$

wherein:

$L_{drop}$ is an estimated value defining loss for the service in cases of abnormal service session termination (i.e., service termination initiated by the network);

$L_{softdrop}$ is an estimated value defining loss for the service in cases where the service session is terminated by a user of the service due to quality of the service; and

0 indicates no loss for the service and is used in cases where the service session is not dropped.

In one embodiment, the losses due to abnormal service termination $L_{drop}$ are calculated as a function of the length

11

of the session and the average session length for services of the same service type. Thus:

$$L_{drop} = \left[ \frac{1 - T_{l,avg}}{\left( T_l - T_{l,avg} \right)} \right] \times 4$$

where:

$T_l$ defines the length of the session for the service; and
$T_{l,avg}$ defines the average session length for one or more services of the same service type; and

where $L_{drop}$ is not less than 0.

The losses due to unwanted service termination $L_{softdrop}$ are similarly calculated. However, they are multiplied by $F_{sd}$, which is a value representing a difference of the user experience between drop and soft drop scenarios. Therefore:

$$L_{softdrop} = F_{sd} \times \left[ \frac{1 - T_{l,avg}}{\left( T_l - T_{l,avg} \right)} \right] \times 4$$

where:

$F_{sd}$ is a multiplier representing a difference in a user experience between when the network initiates an abnormal session termination and when a user terminates the session due to a quality of the service; and

where $L_{softdrop}$ is not less than 0.

According to at least one embodiment of the present disclosure, the multiplier $F_{sd}$ depends on the service type, as illustrated in the following table.

**Table 3** Example values for $F_{sd}$.

| SERVICE TYPE | $F_{sd}$ |
|---|---|
| Voice | 0.9 |
| Video | 0.8 |
| Gaming | 0.7 |
| Web Browsing | 0.7 |

As previously stated, embodiments of the present disclosure are configured to estimate optimal parameter settings for the QoE system using machine learning (ML) techniques. For example, the initial 10% cut off parameter for a loss function can be different for each model after optimization. These parameters, therefore, would be optimized for each different loss model.

According to one embodiment, the ML technique used to optimize the parameters targets the function(s) related to the sensitivity of the QoE system in measuring network degradation by QoE value. These metrics should correlate with each other with a minimal square error sum. Currently, there are multiple system parameter optimization methods that are suitable for use with the present embodiments. For example, one suitable method that may be used with the present embodiments is the Expectation Maximization (EM) Algorithm. The EM Algorithm is an approach used to determine a maximum likelihood estimation in the presence of latent variables. In another embodiment, the EM Algorithm is combined with a Gaussian Mixture Model (GMM), which is a statistical procedure or learning algorithm used to estimate the parameters of probability distributions to "best fit" the density of a given training dataset. The iterative parameter optimization procedure used in one embodiment executes the EM-GMM combined algorithm on a subset of input records on a daily basis to follow the system changes in processing the network data.

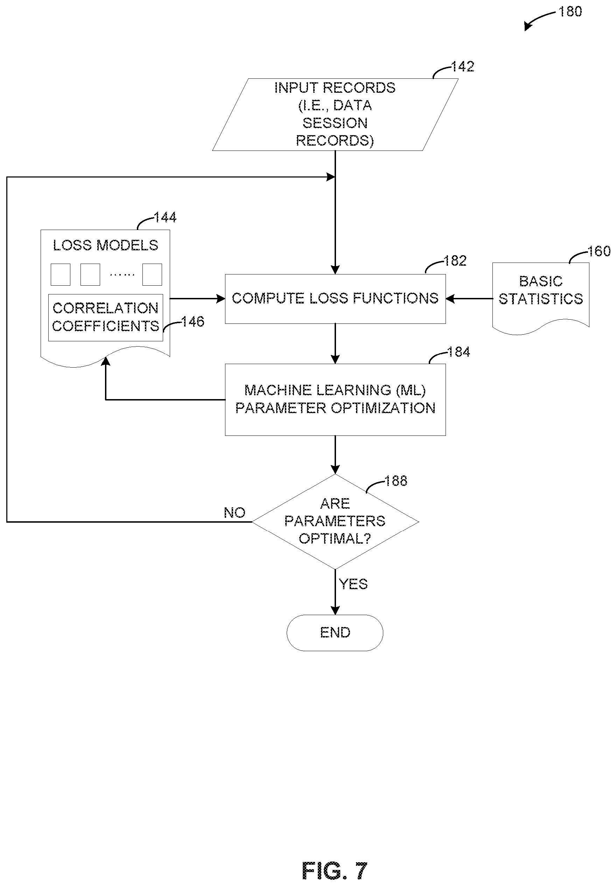

Figure 7 is a flow diagram illustrating a method 180 of QoE parameter optimization according to one embodiment of the present disclosure. As seen in Figure 7, method 180 calculate the loss functions (box 182) based on the input data session records 142, the loss models 144, and the correlation coefficients 146, as previously described. In some situations, the loss models may be calculated based on the Basics Statistic loss models 160, as previously described. Regardless of the particular calculations, however, this embodiment of the present disclosure employs the EM-GMM combined algorithm on a subset of the input data session records 142 to learn the changing parameters (box 184). The optimized parameters are then used to update those used in connection with the one or more loss models 144 used in calculating the loss functions (box 182). Additionally, method 180 checks to determine whether the optimized parameters determined in box 184 are optimal (box 188) If so, method 180 ends. If not, however, method 180 continues by again computing the loss function (box 182), but based on the latest QoE parameters.

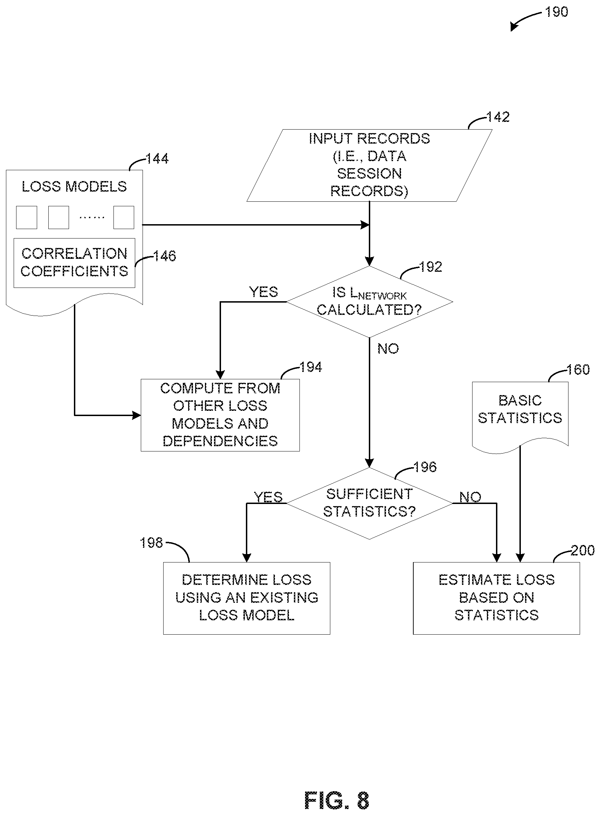

Figure 8 is a flow diagram illustrating a method 190 for evaluating loss models based on the KPIs and other information included in the data session records according to another embodiment of the present disclosure. As seen in Figure 8, method 190 first determines whether $L_{network}$ has been calculated based on the input data session records 142, the loss models 144, and the correlation coefficients 146 (box 192). If $L_{network}$ has been calculated, method 190 computes the loss functions based on those associated with one or more other loss models and dependencies, as previously described (box 194). If $L_{network}$ has not been calculated, method 190 then determines whether there are a sufficient amount of statistics on which to determine a loss function (box 196). If there are a sufficient amount of statistics available, method 190 determines the loss for a service using the an existing loss model (box 198). Otherwise, method 190 estimates the loss (box 200) based on the existing Basic Statistic loss models 160.

Figure 9 is a block diagram illustrating the hierarchy of dependent features 210 (i.e., QoE parameters and their dependencies) that are considered when determining network degradation according to one embodiment of the present disclosure. Network degradation can be measured with network quality factors that have overlapping parameters and dependencies on each other. Such overlaps and dependencies may be obvious or hidden. The obvious dependencies are readily known based on domain knowledge and can be manually provisioned by a network operator into the QoE system of the present embodiments. Hidden dependencies, however, are discoverable during system operation and can be provisioned into the QoE system automatically based, for example, on the computed correlations between each pair of quality factors.

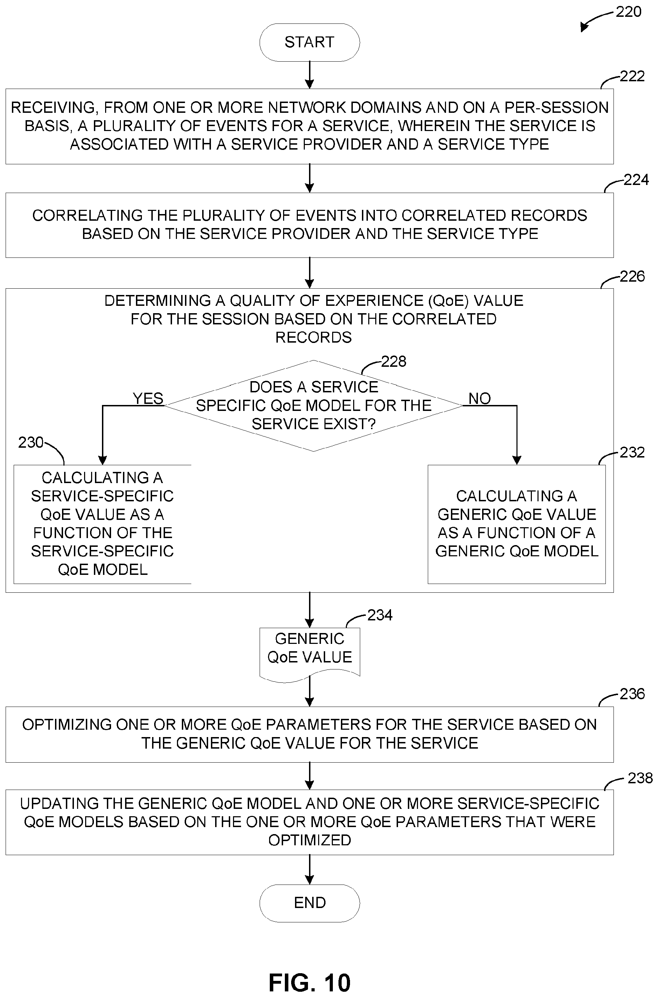

Figure 10 is a flow chart illustrating a method 220 for determining a generic QoE value according to one embodiment of the present disclosure. In this embodiment, method 220 is implemented by a node (e.g., a network node) in an analytics system of a network, but may be implemented by other nodes as needed or desired. By way of example only, method 220 may be implemented by a network function in a cloud implementation of the present embodiments.

In method 220, the node receives a plurality of events for a service (box 222). In this embodiment, the service is associated with a service provider and a service type and are received from one or more of the network domains 50, 60, 70 on a per-session basis. Upon receiving the events, the node correlates the plurality of events into correlated records based on the service provider and the service type (box 224). So correlated, the node determines a QoE value for the session based on the correlated records (box 226). To determine the correlated QoE value in this embodiment, the node first determines whether a service specific QoE model for the service already exists (box 228). If a QoE model already exists, the node calculates a service specific QoE value as a function of the service specific QoE model (box 230). If not, the node calculates a generic QoE value as a function of a generic QoE model. Regardless of how the QoE value is calculated, however, the node takes the QoE value (box 234) and optimizes one or more QoE parameters for the service based on that value (box 236). The node then updates the generic QoE model, and one or more of the service specific QoE models, based on one or more QoE parameters that were optimized (box 238).

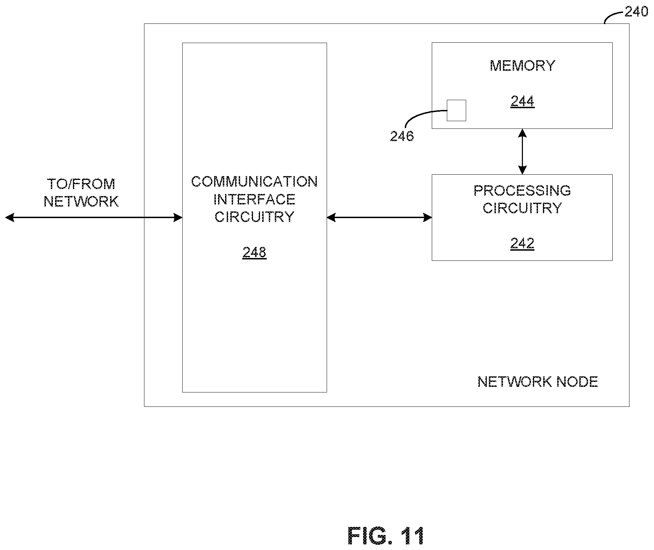

Figure 11 is a functional block diagram illustrating some components of a node 240 in an analytics system of a network in which the node is configured to determine a generic QoE value according to one embodiment of the present disclosure. As seen in Figure 11, node 240 comprises processing circuitry 242, memory circuitry 244, and communications interface circuitry 248. In addition, memory circuitry 244 stores a computer program 246 that, when executed by processing circuitry 242, configures node 240 to implement the methods herein described.

In more detail, the processing circuitry 242 controls the overall operation of node 240 and processes the data and information according to the present embodiments. Such processing includes, but is not limited to, receiving, from one or more network domains 50, 60, 70 and on a per-session basis, a plurality of events for a service associated with a service provider and having a service type, correlating the plurality of events into correlated records based on the service provider and the service type, and determining a QoE value for the session based on the correlated records. In one embodiment, the processing to determine the QoE value comprises determining whether a service specific QoE model for the service exists based on the service provider and the service type associated with the service, calculating a service specific QoE value as a function of the service specific QoE model responsive to determining that the service specific QoE model exists, and calculating a generic QoE value as a function of a generic QoE model responsive to determining that the service specific QoE model does not exist. In this regard, the processing circuitry 242 may comprise one or more microprocessors, hardware, firmware, or a combination thereof.

The memory circuitry 244 comprises both volatile and non-volatile memory for storing computer program code and data needed by the processing circuitry 242 for operation. Memory circuitry 244 may comprise any tangible, non-transitory computer-readable storage medium for storing data including electronic, magnetic, optical, electromagnetic, or semiconductor data storage. As stated above, memory circuitry 244 stores a computer program 246 comprising executable instructions that configure the processing circuitry 242 to implement the methods herein described. A computer program 246 in this regard may comprise one or more code modules corresponding to the functions described above.

In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 246 for configuring the processing circuitry 242 as herein described may be stored in a removable memory, such as a portable compact disc, portable digital video disc, or other removable media. The computer program 246 may also be embodied in a carrier such as an electronic signal, optical signal, radio signal, or computer readable storage medium.

The communications interface circuitry 248 communicatively connects node 240 to one or more other nodes via a communications network, as is known in the art. In some embodiments, for example, communications interface circuitry 248 communicatively connects node 240 to one or more other nodes in the communications network. As such, communications interface circuitry 248 may comprise, for example, an ETHERNET card or other circuitry configured to communicate wirelessly with one or more other nodes via the communications network.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, such as processing circuitry 242. Such processing circuitry may include one or more microprocessor or microcontrollers, as well as other digital hardware, which may include digital signal processors (DSPs), special-purpose digital logic, and the like. The processing circuitry may be configured to execute program code (e.g., computer program 246) stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

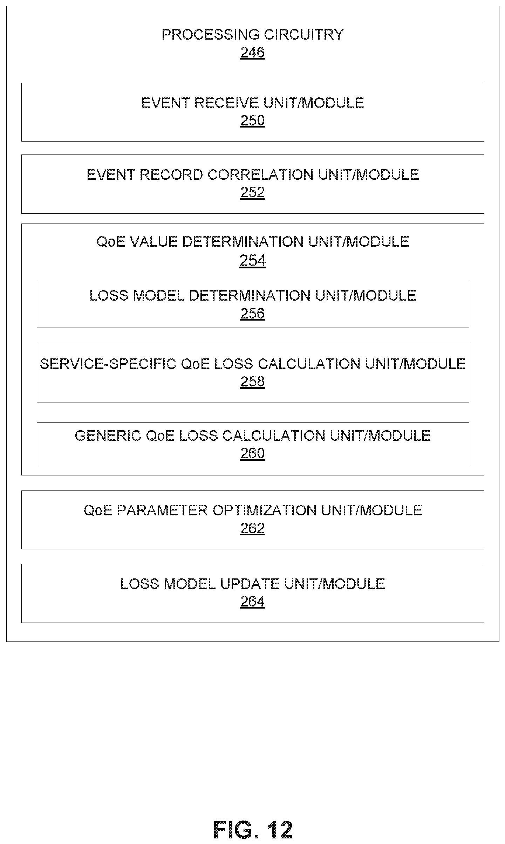

Figure 12 is a functional block diagram illustrating a computer program (e.g., computer program 246) that, when executed by the processing circuitry 242 of node 240, causes the node 240 to determine a generic QoE value according to one embodiment of the present disclosure. As seen in Figure 11, computer program 246 executed by processing circuitry 242 comprises an event receive module/unit 250, an event record correlation module/unit 252, a QoE value determination unit/module 254, a QoE parameter optimization unit/module 262, and a loss model update unit/module 264. The QoE value determination unit/module 254 further comprises one or more subunits/submodules comprising a loss model determination unit/module 256, a service specific QoE loss calculation unit/module 258, and a generic QoE loss calculation unit/module 260.

The event receive module/unit 250 comprises computer program code that, when executed by processing circuitry 242, configures node 240 to receive, from one or more network domains 50, 60, 70 and on a per-session basis, a plurality of events for a service, wherein the service is associated with a service provider and a service type, as previously described. The event record correlation module/unit 252 comprises computer program code that, when executed by processing circuitry 242, configures node 240 to correlate the plurality of events into correlated records based on the service provider and the service type, as previously described. The QoE value determination unit/module 254 comprises computer program code that, when executed by processing circuitry 242, configures node 240 to determine the QoE value for the session based on the correlated records. More specifically, in at least one embodiment, the loss model determination unit/module 256 comprises computer program code that, when executed by processing circuitry 242, configures node 240 to determine whether a service specific QoE model for the service exists based on the service provider and the service type associated with the service. The service specific QoE loss calculation unit/module 258 comprises computer program code that, when executed by processing circuitry 242, configures node 240 to calculate a service specific QoE value as a function of the service specific QoE model if the service specific QoE model exists. The generic QoE loss calculation unit/module 260 comprises computer program code that, when executed by processing circuitry 242, configures node 240 to calculate a generic QoE value as a function of a generic QoE model if a service specific QoE model does not exist. The QoE parameter optimization unit/module 262 comprises computer program code that, when executed by processing circuitry 242, configures node 240 to optimize the QoE parameters, as previously described. The loss model update unit/module 264 comprises computer program code that, when executed by processing circuitry 242, configures node 240 to update the loss model(s) as previously described. In at least one embodiment, the computer program code associated with the loss model update unit/module 264 comprises code implementing one or more machine learning algorithms, as previously described.

Embodiments further include a carrier containing such a computer program 246. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

**Claims**

1. A method, implemented by a node in an analytics system of a network, for performing network analytics, the method comprising:

   receiving (222), from one or more network domains and on a per-session basis, a plurality of events for a service, wherein the service is associated with a service provider and a service type;
   correlating (224) the plurality of events into correlated records based on the service provider and the service type; and
   determining (226) a Quality of Experience, QoE, value for the session based on the correlated records, wherein the method is **characterized by** that the determining of the QoE value comprises:

   determining (228) whether a service specific QoE model for the service exists based on the service provider and the service type associated with the service;
   calculating (230) a service specific QoE value as a function of the service specific QoE model responsive to determining that the service specific QoE model exists; and
   calculating (234) a generic QoE value as a function of a generic QoE model responsive to determining that the service specific QoE model does not exist,

   wherein the generic QoE model calculates the generic QoE value as:

   $$QoE_{generic} = QoE_{max} - L_{accessibility} - L_{integrity} - L_{retainability}$$

   wherein:

   $QoE_{generic}$ is a scalar value between $QoE_{min}$ and $QoE_{max}$;
   $QoE_{min}$ is $\geq 0$ and is the minimum possible value for the generic QoE value when service degradation is detected;
   $QoE_{max}$ is the maximum possible value for the generic QoE value when no service degradation is detected;
   $L_{accessibility}$ is an estimated value defining loss as a function of service accessibility;
   $L_{integrity}$ is an estimated value defining loss as a function of limitations on, and degradation to, the service caused by end devices, codecs, and the network while a session is active;
   $L_{retainability}$ is an estimated value defining loss due to abnormal or unwanted service termination.

2. The method of claim 1, wherein the $L_{accessibility}$ is calculated as:

   $$L_{accessibility} = F_{access} \times (L_{accessfailure} + L_{delay})$$

   wherein:

   $F_{access}$ is a coefficient value defining a relative importance of service accessibility according to the service type and service length;
   $L_{accessfailure}$ is an estimated value defining loss as a function of service access failure; and
   $L_{delay}$ is an estimated value defining loss as a function of service delay.

3. The method of claim 1, wherein $L_{integrity}$ is calculated as:

   $$L_{integrity} = L_{device} + L_{coding} + L_{network}$$

   wherein:

   $L_{device}$ is an estimated value defining loss due to end devices and is determined based on independent measurements of the service made by the end devices, or on capabilities of a device type of the device;

$L_{coding}$ is an estimated value defining a sum of the losses due to the codecs used in coding the data and the transcodings of the data between different types of codecs in a data path; and

$L_{network}$ is an estimated value defining network degradation in a given network domain, and is determined based on one or more Key Performance Indicator, KPI, values reported by the given network domain, and interdependencies of the KPI values reported by the given network domain.

4. The method of claim 1, wherein $L_{retainability}$ is set to:

$$L_{retainability} = \begin{bmatrix} L_{drop} \\ L_{softdrop} \\ 0 \end{bmatrix}$$

wherein:

$L_{drop}$ is an estimated value defining loss in cases of abnormal service session termination initiated by the network;

$L_{softdrop}$ is an estimated value defining loss in cases where the service session is terminated by a user of the service due to quality of the service; and

0 indicates no loss and is used in cases where the service session is not dropped.

5. The method of claim 1, further comprising:

optimizing one or more QoE parameters for the service based on the generic QoE value for the service (236); and

updating the generic QoE model and one or more service specific QoE models based on the one or more QoE parameters that were optimized (238).

6. The method of claim 1, wherein the generic QoE value for the service is a scalar value that falls within a predetermined range of scalar values.

7. The method of claim 6, wherein the predetermined range of scalar values is 1..5, inclusive.

8. The method of any of claims 1-7, wherein the one or more network domains comprise one or more of a radio access network, RAN, domain, a Core Network, CN, domain, and an Internet Protocol, IP, Multimedia Subsystem, IMS, domain.

9. The method of claim 1-8, wherein the service type comprises one of:

audio;
video;
gaming;
web browsing;
data transfer.

10. The method of any of claims 1-9, wherein each correlated record comprises one or more Key Performance Indicators, KPIs.

11. The method of claim 10, wherein each KPI in at least one correlated record is scaled to a predetermined interval that defines minimum and maximum values for the KPI.

12. The method of any of claims 10-11, wherein the predetermined interval for a first KPI in a given correlated record is different than the predetermined interval for a second KPI in the given correlated record.

13. A node (240) in an analytics system of a network, the node configured to:

receive, from one or more network domains and on a per-session basis, a plurality of events for a service, wherein the service is associated with a service provider and a service type;

correlate the plurality of events into correlated records based on the service provider and the service type; and

determine a Quality of Experience, QoE, value for the session based on the correlated records, wherein the node (240) is **characterized by** that the determination of the QoE value comprises:

determine whether a service specific QoE model for the service exists based on the service provider and the service type associated with the service;
calculate a service specific QoE value as a function of the service specific QoE model responsive to determining that the service specific QoE model exists; and

calculate a generic QoE value as a function of a generic QoE model responsive to determining that the service specific QoE model does not exist, wherein the generic QoE model calculates the generic QoE value as:

$$QoE_{generic} = QoE_{max} - L_{accessibility} - L_{integrity} - L_{retainability}$$

wherein:

$QoE_{generic}$ is a scalar value between $QoE_{min}$ and $QoE_{max}$;
$QoE_{min}$ is $\geq 0$ and is the minimum possible value for the generic QoE value when service degradation is detected;
$QoE_{max}$ is the maximum possible value for the generic QoE value when no service degradation is detected;
$L_{accessibility}$ is an estimated value defining loss as a function of service accessibility;
$L_{integrity}$ is an estimated value defining loss as a function of limitations on, and degradation to, the service caused by end devices, codecs, and the network while a session is active;
$L_{retainability}$ is an estimated value defining loss due to abnormal or unwanted service termination.

14. The node of claim 13, further configured to perform the method of any of claims 2-12.

15. A computer program comprising executable instructions that, when executed by a processing circuit in a node, causes the node to perform a method according to any one of the claims 1-12.

**Patentansprüche**

1. Verfahren, das von einem Knoten in einem Analysesystem eines Netzwerks implementiert wird, zum Durchführen einer Netzwerkanalyse, wobei das Verfahren Folgendes umfasst:

Empfangen (222) einer Mehrzahl von Ereignissen für einen Dienst von einer oder mehreren Netzwerkdomänen und auf einer Pro-Sitzung-Basis, wobei der Dienst mit einem Dienstanbieter und einem Diensttyp assoziiert ist;
Korrelieren (224) der Mehrzahl von Ereignissen zu korrelierten Datensätzen basierend auf dem Dienstanbieter und dem Diensttyp; und
Bestimmen (226) eines Erlebnisqualitätswerts, QoE-Werts, für die Sitzung basierend auf den korrelierten Datensätzen, wobei das Verfahren **dadurch gekennzeichnet ist, dass** das Bestimmen des QoE-Werts Folgendes umfasst:

Bestimmen (228), ob ein dienstspezifisches QoE-Modell für den Dienst existiert, basierend auf dem Dienstanbieter und dem Diensttyp, die mit dem Dienst assoziiert sind;
Berechnen (230) eines dienstspezifischen QoE-Werts als eine Funktion des dienstspezifischen QoE-Modells in Reaktion auf ein Bestimmen, dass das dienstspezifische QoE-Modell existiert; und
Berechnen (234) eines generischen QoE-Werts als eine Funktion eines generischen QoE-Modells in Reaktion auf ein Bestimmen, dass das dienstspezifische QoE-Modell nicht existiert,

wobei das generische QoE-Modell den generischen QoE-Wert berechnet als:

$$QoE_{generic} = QoE_{max} - L_{accessibility} - L_{integrity} - L_{retainability}$$

wobei:

$QoE_{generic}$ ein Skalarwert zwischen $QoE_{min}$ und $QoE_{max}$ ist;

$QoE_{min} \geq 0$ ist und der minimal mögliche Wert des generischen QoE-Werts ist, wenn Dienstverschlechterung erkannt wird;

$QoE_{max}$ der maximal mögliche Wert des generischen QoE-Werts ist, wenn keine Dienstverschlechterung erkannt wird;

$L_{accessibility}$ ein Schätzwert ist, der Verlust als eine Funktion der Diensterreichbarkeit definiert;

$L_{integrity}$ ein Schätzwert ist, der Verlust als eine Funktion der Einschränkungen und Verschlechterung des Dienstes definiert, die durch Endvorrichtungen, Codecs und das Netzwerk während einer aktiven Sitzung verursacht werden;

$L_{retainability}$ ein Schätzwert ist, der Verlust aufgrund anormaler oder unerwünschter Dienstbeendigung definiert.

2. Verfahren nach Anspruch 1, wobei die $L_{accesibility}$ berechnet wird als:

$$L_{accessibility} = F_{access} \times (L_{accessfailure} + L_{delay})$$

wobei:

$F_{access}$ ein Koeffizientenwert ist, der eine relative Bedeutung der Diensterreichbarkeit gemäß dem Diensttyp und der Dienstlänge definiert;

$L_{accessfailure}$ ein Schätzwert ist, der Verlust als eine Funktion eines Dienstzugriffsfehlers definiert;

$L_{delay}$ ein Schätzwert ist, der Verlust als eine Funktion der Dienstverzögerung definiert.

3. Verfahren nach Anspruch 1, wobei die $L_{integrity}$ berechnet wird als:

$$L_{integrity} = L_{device} + L_{coding} + L_{network}$$

wobei:

$L_{device}$ ein Schätzwert ist, der Verlust aufgrund von Endvorrichtungen definiert und basierend auf unabhängigen Messungen des Dienstes, die von den Endvorrichtungen durchgeführt werden, oder auf den Fähigkeiten eines Vorrichtungstyps der Vorrichtung bestimmt wird;

$L_{coding}$ ein Schätzwert ist, der eine Summe der Verluste aufgrund der Codecs definiert, die beim Codieren der Daten und den Transcodierungen der Daten zwischen verschiedenen Typen von Codecs in einem Datenpfad verwendet werden; und

$L_{network}$ ist ein Schätzwert, der Netzwerkverschlechterung in einer gegebenen Netzwerkdomäne definiert und basierend auf einem oder mehreren Hauptleistungsindikatorwerten, KPI-Werten, die von der gegebenen Netzwerkdomäne gemeldet werden, und Interdependenzen der KPI-Werte bestimmt wird, die von der gegebenen Netzwerkdomäne gemeldet werden.

4. Verfahren nach Anspruch 1, wobei $L_{retainability}$ festgelegt wird als:

$$L_{retainability} = \begin{bmatrix} L_{drop} \\ L_{softdrop} \\ 0 \end{bmatrix}$$

wobei:

$L_{drop}$ ein Schätzwert ist, der Verlust in Fällen von anormaler Dienstsitzungsbeendigung definiert, die vom Netzwerk initiiert wird;

$L_{softdrop}$ ein Schätzwert ist, der Verlust in Fällen definiert, in denen die Dienstsitzung von einem Benutzer des Dienstes aufgrund der Qualität des Dienstes beendet wird; und

0 keinen Verlust anzeigt und in Fällen verwendet wird, in denen die Dienstsitzung nicht abgebrochen wird.

**5.** Verfahren nach Anspruch 1, ferner umfassend:

Optimieren eines oder mehrerer QoE-Parameter für den Dienst basierend auf dem generischen QoE-Wert für den Dienst (236); und

Aktualisieren des generischen QoE-Modells und eines oder mehrerer dienstspezifischer QoE-Modelle basierend auf dem einen oder den mehreren QoE-Parametern, die optimiert wurden (238).

**6.** Verfahren nach Anspruch 1, wobei der generische QoE-Wert für den Dienst ein Skalarwert ist, der in einen vorbestimmten Bereich von Skalarwerten fällt.

**7.** Verfahren nach Anspruch 6, wobei der vorbestimmte Bereich von Skalarwerten 1 bis einschließlich 5 beträgt.

**8.** Verfahren nach einem der Ansprüche 1-7, wobei die eine oder die mehreren Netzwerkdomänen eine oder mehrere von einer Funkzugangsnetzwerkdomäne, RAN-Domäne, einer Kernnetzwerkdomäne, CN-Domäne, und einer Internetprotokoll-,IP-,Multimedia-Subsystem-,IMS-Domäne, umfassen.

**9.** Verfahren nach Anspruch 1-8, wobei der Diensttyp mindestens eines von Folgenden umfasst:

Audio;
Video;
Gaming;
Webbrowsing;
Datenübertragung.

**10.** Verfahren nach einem der Ansprüche 1-9, wobei jeder korrelierte Datensatz einen oder mehrere Hauptleistungsindikatoren, KPIs, umfasst. umfasst.

**11.** Verfahren nach Anspruch 10, wobei jeder KPI in mindestens einem korrelierten Datensatz auf ein vorbestimmtes Intervall skaliert ist, das Minimal- und Maximalwerte für den KPI definiert.

**12.** Verfahren nach einem der Ansprüche 10-11, wobei sich das vorbestimmte Intervall für einen ersten KPI in einem gegebenen korrelierten Datensatz von dem vorbestimmten Intervall für einen zweiten KPI in dem gegebenen korrelierten Datensatz unterscheidet.

**13.** Knoten (240) in einem Analysesystem eines Netzwerks, wobei der Knoten zu Folgendem ausgelegt ist:

Empfangen einer Mehrzahl von Ereignissen für einen Dienst von einem oder mehreren Netzwerkdomänen und auf einer Pro-Sitzung-Basis, wobei der Dienst mit einem Dienstanbieter und einem Diensttyp assoziiert ist;
Korrelieren der Mehrzahl von Ereignissen in korrelierte Datensätze basierend auf dem Dienstanbieter und dem Diensttyp; und
Bestimmen eines Erlebnisqualitätswerts, QoE-Werts, für die Sitzung basierend auf den korrelierten Datensätzen, wobei der Knoten (240) **dadurch gekennzeichnet ist, dass** die Bestimmung des QoE-Werts Folgendes umfasst:

Bestimmen, ob ein dienstspezifisches QoE-Modell für den Dienst existiert, basierend auf dem Dienstanbieter und dem Diensttyp, die mit dem Dienst assoziiert sind;
Berechnen eines dienstspezifischen QoE-Werts als eine Funktion des dienstspezifischen QoE-Modells in Reaktion auf ein Bestimmen, dass das dienstspezifische QoE-Modell existiert; und
Berechnen eines generischen QoE-Werts als eine Funktion eines generischen QoE-Modells in Reaktion auf ein Bestimmen, dass das dienstspezifische QoE-Modell nicht existiert,

wobei das generische QoE-Modell den generischen QoE-Wert berechnet als:

$$QoE_{generic} = QoE_{max} - L_{accessibility} - L_{integrity} - L_{retainability}$$

wobei:

QoE$_{generic}$ ein Skalarwert zwischen QoE$_{min}$ und QoE$_{max}$ ist;

QoE$_{min}$ $\geq$ 0 ist und der minimal mögliche Wert des generischen QoE-Werts ist, wenn Dienstverschlechterung erkannt wird;

QoE$_{max}$ der maximal mögliche Wert des generischen QoE-Werts ist, wenn keine Dienstverschlechterung erkannt wird;

L$_{accessibility}$ ein Schätzwert ist, der Verlust als eine Funktion der Diensterreichbarkeit definiert;

L$_{integrity}$ ein Schätzwert ist, der Verlust als eine Funktion der Einschränkungen und Verschlechterung des Dienstes definiert, die durch Endvorrichtungen, Codecs und das Netzwerk während einer aktiven Sitzung verursacht werden;

L$_{retainability}$ ein Schätzwert ist, der Verlust aufgrund anormaler oder unerwünschter Dienstbeendigung definiert.

14. Knoten nach Anspruch 13, der ferner zum Durchführen des Verfahrens nach einem der Ansprüche 2-12 ausgelegt ist.

15. Computerprogramm, umfassend ausführbare Anweisungen, die bei Ausführung durch eine Verarbeitungsschaltung in einem Knoten den Knoten zum Durchführen eines Verfahrens nach einem der Ansprüche 1-12 veranlassen.

**Revendications**

1. Procédé, mis en œuvre par un nœud dans un système d'analyse d'un réseau, pour réaliser une analyse de réseau, le procédé comprenant :

la réception (222), depuis un ou plusieurs domaines de réseau et sur une base par session, d'une pluralité d'événements pour un service, dans lequel le service est associé à un fournisseur de service et à un type de service ;

la corrélation (224) de la pluralité d'événements en enregistrements corrélés sur la base du fournisseur de service et du type de service ; et

la détermination (226) d'une valeur de qualité d'expérience, QoE, pour la session sur la base des enregistrements corrélés, dans lequel le procédé est **caractérisé en ce que** la détermination de la valeur de QoE comprend :

la détermination (228) s'il existe ou non un modèle de QoE spécifique au service pour le service sur la base du fournisseur de service et du type de service associés au service ;

le calcul (230) d'une valeur de QoE spécifique au service en fonction du modèle de QoE spécifique au service en réponse à la détermination que le modèle de QoE spécifique au service existe ; et

le calcul (234) d'une valeur de QoE générique en fonction d'un modèle de QoE générique en réponse à la détermination que le modèle de QoE spécifique au service n'existe pas,

dans lequel le modèle de QoE générique calcule la valeur de QoE générique comme suit :

$$QoE_{générique} = QoE_{max} - L_{accessibilité} - L_{intégrité} - L_{maintien}$$

dans lequel :

QoE$_{générique}$ est une valeur scalaire entre QoE$_{min}$ et QoE$_{max}$ ;

QoE$_{min}$ est $\geq$ 0 et est la valeur possible minimale pour la valeur de QoE générique lorsqu'une dégradation de service est détectée ;

QoE$_{max}$ est la valeur possible maximale pour la valeur de QoE générique lorsque aucune dégradation de service n'est détectée ;

L$_{accessibilité}$ est une valeur estimée définissant une perte en fonction d'une accessibilité de service ;

L$_{intégrité}$ est une valeur estimée définissant une perte en fonction de limitations sur le service et d'une dégradation du service provoquées par des dispositifs terminaux, des codecs et le réseau pendant qu'une session est active ;

L$_{maintien}$ est une valeur estimée définissant une perte due à une terminaison de service anormale ou indésirable.

2. Procédé selon la revendication 1, dans lequel L$_{accessibilité}$ est calculé comme suit :

$$L_{accessibilité} = F_{accès} \times (L_{échec\_d'accès} + L_{retard})$$

dans lequel :

$F_{accès}$ est une valeur du coefficient définissant une importance relative d'une accessibilité de service en fonction du type de service et d'une durée de service ;
$L_{échec\_d'accès}$ est une valeur estimée définissant une perte en fonction d'un échec d'accès au service ; et
$L_{retard}$ est une valeur estimée définissant une perte en fonction d'un retard de service.

**3.** Procédé selon la revendication 1, dans lequel $L_{intégrité}$ est calculé comme suit :

$$L_{intégrité} = L_{dispositif} + L_{codage} + L_{réseau}$$

dans lequel :

$L_{dispositif}$ est une valeur estimée définissant une perte due à des dispositifs terminaux et est déterminée sur la base de mesures indépendantes du service réalisées par les dispositifs terminaux ou sur la base de capacités d'un type de dispositif du dispositif ;
$L_{codage}$ est une valeur estimée définissant une somme des pertes dues aux codecs utilisés dans le codage des données et aux transcodages des données entre différents types de codecs dans un chemin de données ; et
$L_{réseau}$ est une valeur estimée définissant une dégradation de réseau dans un domaine de réseau donné et est déterminée sur la base d'une ou plusieurs valeurs d'indicateurs de performances clés, KPI, rapportées par le domaine de réseau donné, et d'interdépendances des valeurs de KPI rapportées par le domaine de réseau donné.

**4.** Procédé selon la revendication 1, dans lequel $L_{maintien}$ est défini comme suit :

$$L_{maintien} = \begin{bmatrix} L_{abandon} \\ L_{abandon\_souple} \\ 0 \end{bmatrix}$$

dans lequel :

$L_{abandon}$ est une valeur estimée définissant une perte en cas de terminaison anormale de session de service initiée par le réseau ;
$L_{abandon\_souple}$ est une valeur estimée définissant une perte en cas de terminaison de la session de service par un utilisateur du service en raison d'une qualité du service ; et
0 indique aucune perte et est utilisé dans des cas où la session de service n'est pas abandonnée.

**5.** Procédé selon la revendication 1, comprenant en outre :

l'optimisation d'un ou plusieurs paramètres de QoE pour le service sur la base de la valeur de QoE générique pour le service (236) ; et
la mise à jour du modèle de QoE générique et d'un ou plusieurs modèles de QoE spécifiques au service sur la base des un ou plusieurs paramètres de QoE qui ont été optimisés (238).

**6.** Procédé selon la revendication 1, dans lequel la valeur de QoE générique pour le service est une valeur scalaire qui se trouve dans une plage prédéterminée de valeurs scalaires.

**7.** Procédé selon la revendication 6, dans lequel la plage prédéterminée de valeurs scalaires est de 1 à 5 inclus.

**8.** Procédé selon l'une quelconque des revendications 1 à 7, dans lequel les un ou plusieurs domaines de réseau comprennent un ou plusieurs parmi un domaine de réseau d'accès radio, RAN, un domaine de réseau central, CN, et un domaine de sous-système multimédia de protocole Internet, IP, IMS.

9. Procédé selon l'une quelconque des revendications 1 à 8, dans lequel le type de service comprend l'un parmi :

   audio ;
   vidéo ;
   jeux ;
   navigation Web ;
   transfert de données.

10. Procédé selon l'une quelconque des revendications 1 à 9, dans lequel chaque enregistrement corrélé comprend un ou plusieurs indicateurs de performances clés, KPI.

11. Procédé selon la revendication 10, dans lequel chaque KPI dans au moins un enregistrement corrélé est mis à l'échelle à un intervalle prédéterminé qui définit des valeurs minimale et maximale pour le KPI.

12. Procédé selon l'une quelconque des revendications 10 et 11, dans lequel l'intervalle prédéterminé pour un premier KPI dans un enregistrement corrélé donné est différent de l'intervalle prédéterminé pour un deuxième KPI dans l'enregistrement corrélé donné.

13. Nœud (240) dans un système d'analyse d'un réseau, le nœud étant configuré pour :

   recevoir, depuis un ou plusieurs domaines de réseau et sur une base par session, une pluralité d'événements pour un service, dans lequel le service est associé à un fournisseur de service et à un type de service ;
   corréler la pluralité d'événements en enregistrements corrélés sur la base du fournisseur de service et du type de service ; et
   déterminer une valeur de qualité d'expérience, QoE, pour la session sur la base des enregistrements corrélés, dans lequel le nœud (240) est **caractérisé en ce que** la détermination de la valeur de QoE comprend :

   la détermination s'il existe ou non un modèle de QoE spécifique au service pour le service sur la base du fournisseur de service et du type de service associés au service ;
   le calcul d'une valeur de QoE spécifique au service en fonction du modèle de QoE spécifique au service en réponse à la détermination que le modèle de QoE spécifique au service existe ; et
   le calcul d'une valeur de QoE générique en fonction d'un modèle de QoE générique en réponse à la détermination que le modèle de QoE spécifique au service n'existe pas,

   dans lequel le modèle de QoE générique calcule la valeur de QoE générique comme suit :

   $$QoE_{générique} = QoE_{max} - L_{accessibilité} - L_{intégrité} - L_{maintien}$$

   dans lequel :

   $QoE_{générique}$ est une valeur scalaire entre $QoE_{min}$ et $QoE_{max}$ ;
   $QoE_{min}$ est $\geq 0$ et est la valeur possible minimale pour la valeur de QoE générique lorsqu'une dégradation de service est détectée ;
   $QoE_{max}$ est la valeur possible maximale pour la valeur de QoE générique lorsque aucune dégradation de service n'est détectée ;
   $L_{accessibilité}$ est une valeur estimée définissant une perte en fonction d'une accessibilité de service ;
   $L_{intégrité}$ est une valeur estimée définissant une perte en fonction de limitations sur le service et d'une dégradation du service provoquées par des dispositifs terminaux, des codecs et le réseau pendant qu'une session est active ;
   $L_{maintien}$ est une valeur estimée définissant une perte due à une terminaison de service anormale ou indésirable.

14. Nœud selon la revendication 13, configuré en outre pour réaliser le procédé selon l'une quelconque des revendications 2 à 12.

15. Programme informatique comprenant des instructions exécutables qui, lorsqu'elles sont exécutées par un circuit de traitement dans un nœud, amènent le nœud à réaliser un procédé selon l'une quelconque des revendications 1 à 12.

FIG. 1

EP 4 578 165 B1

EP 4 578 165 B1

QoE CALCULATION MODULE

EXISTING SERVICE-SPECIFIC QoE MODELS

QoE MODEL SERVICE 1
82a

QoE MODEL SERVICE 2
82b
…
…
…
QoE MODEL SERVICE n
82n

GENERIC QoE MODEL

GENERIC LOSS MODEL
92

KPI COUPLING CALCULATION MODULE
94

ML PARAMETER OPTIMIZATION MODULE
96

80

90

30

24

FIG. 2

FIG. 3

ORDERED AND NORMALIZED KPI HISTOGRAM

SCALED CUT-OFF KPI LOSS DISTRIBUTION

ESTIMATED CUMULATIVE KPI DISTRIBUTION

FIG. 4A

FIG. 4B

FIG. 5

170

144

LOSS MODELS

□ □ ...... □

142

INPUT RECORDS
(I.E., DATA
SESSION
RECORDS)

CORRELATION
COEFFICIENTS

146

172

CALCULATE $L_{NETWORK}$

174

FILTER RECORDS BASED ON
DEPENDENT FEATURES

176

CALCULATE CORRELATION
BETWEEN $I^{TH}$ AND $J^{TH}$ LOSS
MODELS

FIG. 6

180

INPUT RECORDS
(I.E., DATA
SESSION
RECORDS) — 142

LOSS MODELS — 144

□ □ ...... □

CORRELATION
COEFFICIENTS — 146

COMPUTE LOSS FUNCTIONS — 182

BASIC
STATISTICS — 160

MACHINE LEARNING (ML)
PARAMETER OPTIMIZATION — 184

ARE
PARAMETERS
OPTIMAL? — 188

NO

YES

END

**FIG. 7**

FIG. 8

EP 4 578 165 B1

210

**Transport**

| Bitrate | | Throughput |

| Burst size S/net side | Frame loss S/net side | Burst loss S/net side |

| | Jitter S/net side | Packet loss S/net side |

1->1

| Burst size e2e | Frame loss e2e | Burst loss e2e |

| Packet delay e2e | Jitter e2e | Packet loss e2e |

1->1

| Burst size R side | Frame loss R side | Burst loss R side |

| Packet delay R side | Jitter R side | Packet loss R side |

PDCP loss UL

RLC loss UL

Power restr.

TA

HARQ loss rate UL

Sectors

Antenna type

RAT

Frequency band

**Sender UL radio**

R HOs

R Speed

R Handover success ratio

R Handover exec. time

S HOs

S Speed

S Handover success ratio

S Handover exec. time

**Mobility**

Serving RSRP

Serving RSRQ

Neighbor RSRP

Neighbor RSRQ

Per session PRBs

RSRP

RSRQ

PRBs

Subs

SQI

TA

RAT

Frequency band

Sectors

Antenna type

**Receiver DL radio**

PDCP loss DL

RLC loss DL

HARQ loss rate DL

**FIG. 9**

32

220

START

222

RECEIVING, FROM ONE OR MORE NETWORK DOMAINS AND ON A PER-SESSION BASIS, A PLURALITY OF EVENTS FOR A SERVICE, WHEREIN THE SERVICE IS ASSOCIATED WITH A SERVICE PROVIDER AND A SERVICE TYPE

224

CORRELATING THE PLURALITY OF EVENTS INTO CORRELATED RECORDS BASED ON THE SERVICE PROVIDER AND THE SERVICE TYPE

226

DETERMINING A QUALITY OF EXPERIENCE (QoE) VALUE FOR THE SESSION BASED ON THE CORRELATED RECORDS

228

DOES A SERVICE SPECIFIC QoE MODEL FOR THE SERVICE EXIST?

YES

NO

230

CALCULATING A SERVICE-SPECIFIC QoE VALUE AS A FUNCTION OF THE SERVICE-SPECIFIC QoE MODEL

232

CALCULATING A GENERIC QoE VALUE AS A FUNCTION OF A GENERIC QoE MODEL

234

GENERIC QoE VALUE

236

OPTIMIZING ONE OR MORE QoE PARAMETERS FOR THE SERVICE BASED ON THE GENERIC QoE VALUE FOR THE SERVICE

238

UPDATING THE GENERIC QoE MODEL AND ONE OR MORE SERVICE-SPECIFIC QoE MODELS BASED ON THE ONE OR MORE QoE PARAMETERS THAT WERE OPTIMIZED

END

**FIG. 10**

**FIG. 11**

PROCESSING CIRCUITRY
246

EVENT RECEIVE UNIT/MODULE
250

EVENT RECORD CORRELATION UNIT/MODULE
252

QoE VALUE DETERMINATION UNIT/MODULE
254

LOSS MODEL DETERMINATION UNIT/MODULE
256

SERVICE-SPECIFIC QoE LOSS CALCULATION UNIT/MODULE
258

GENERIC QoE LOSS CALCULATION UNIT/MODULE
260

QoE PARAMETER OPTIMIZATION UNIT/MODULE
262

LOSS MODEL UPDATE UNIT/MODULE
264

FIG. 12

**EP 4 578 165 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021204011 A1